# EUROPEAN PATENT APPLICATION

(11) **EP 4 613 352 A1**
(43) Date of publication of application: **10.09.2025**
(21) Application number: 24161151.6
(22) Date of filing: 04.03.2024
(51) Int. Cl.: B01D 29/11, B01D 29/52, B01D 29/86, B01J 8/00, B01D 29/23, B01D 35/027, B01D 63/06, B01D 71/02

(54) **FILTERING DEVICE AND SYSTEM AND METHOD FOR MANUFACTURING AQUEOUS SLURRY USING THE SAME**

(71) Applicant: Umicore Battery Materials Finland Oy, 67900 Kokkola (FI)
(72) Inventor: HASSINEN, Ville, 67900 Kokkola (FI); MARJELUND, Janne, 67900 Kokkola (FI); KIVELÄ, Juho, 67900 Kokkola (FI); VEHKAMÄKI, Ville, 67900 Kokkola (FI)
(74) Representative: Umicore RDI Patent Department

(57) **Abstract**

It is disclosed a filtering device (100) that comprises a vessel (101) comprising a first inlet (106) for receiving the slurry and a first outlet (104) for conducting out the slurry, respectively. It (100) also comprises a conduit (10) comprising a second inlet (30), a second outlet (20), and a filter module (90) comprising a tubular filter (40) extending inside the vessel (101) having an open first end (40a) and a closed second end (40b). The filter module (90) comprises a suction tube (60) arranged to extend inside the tubular filter (40) between the first end (40a) and the second end (40b), wherein there is an intermediate space (80) between the tubular filter (40) and the suction tube (60), that is fluidly connected to the second inlet (30) of the conduit (10) via the suction tube (60). A system and a method for manufacturing an aqueous slurry are also disclosed.

## Description

### TECHNICAL FIELD

Generally, the present invention relates to a filtering device and to a system and a method for manufacturing an aqueous slurry using the filtering device. Particularly, however not exclusively, the present invention relates to a filtering device suitable for solid-liquid separation in a precipitation process.

### BACKGROUND

In lithium-ion secondary batteries the lithium-transition metal oxides of a cathode-active material are typically manufactured from the precursor material of transition-metal hydroxides or its oxidized forms or transition-metal carbonates manufactured in turn in co-precipitation processes. Commonly such precipitation processes comprise adding and mixing the aqueous solutions of transition metal salt and a precipitant with the existence of a potential complexing agent.

These precursor synthesis reactions last from several hours to tens of hours depending on the size and growth rate of the precipitated particles obtained during the process. Therefore, in the case of precipitation processes when the volume of the raw materials, i.e., reactants, fed into the reactor exceeds the limit of the reactor and/or the solids content of the reaction slurry is wanted to be increased, a partial liquid portion removal, i.e., a partial mother liquid removal, by a solid-liquid separating, i.e., filtering, may be performed to continue the precipitation.

In the coprecipitation processes where a part of the mother liquor is removed during the precipitation process to increase the solids content of the reaction slurry commonly an external filtering concentrator is used. In this case, the solid-liquid separating is implemented in a way that the slurry from a precipitation reaction vessel is conducted inside a vessel or container of the external concentrator where it is destined to be filtered through a filter member, such as a tubular filter, by pressurizing the vessel of the concentrator, whereby the mother liquor inside the vessel passes the filter member. The filtered mother liquor is then conducted outside of the process and the concentrated slurry inside the vessel of the external concentrator is circulated back to the reaction vessel. Due to the pressure applied in such a kind of filtration, solid particles of the slurry typically form a tight cake layer on top (i.e., feed side) of the filter membrane and hence block the filter lattice, preventing (i.e., blinding) the liquid phase from crossing the filter, drastically decreasing the filtering efficiency.

In view of above, there is a need for further improvements in the solid-liquid separating devices for facilitating an improved co-precipitation process.

### SUMMARY OF THE INVENTION

It is a first object of the present invention to provide a filtering device to destined to be coupled externally with a chemical reactor for co-precipitation process.

It is a second object of the present invention to provide a system for co-precipitating comprising the filtering device.

It is a third object of the present invention to provide a method for manufacturing an aqueous slurry where the solid-liquid separation is performed by using the filtering device.

In a first aspect, the first object of the invention is achieved by providing a filtering device according to claim 1. The filtering device comprises a sealable vessel comprising a first inlet for receiving the slurry into the vessel and a first outlet for conducting the slurry outside the vessel. The device further comprises a conduit connected to the vessel for conducting a filtrate to outside of the sealable vessel. The conduit comprises a second inlet and a second outlet. The filtering device also comprises a filter module comprising a tubular filter extending inside the vessel having a first end and a second end. The first end of the tubular filter being open, and a second end of the tubular filter being sealed. The filter module further comprises a suction tube arranged to extend inside the tubular filter between the first end and the second end of the tubular filter, wherein there is an intermediate space between the tubular filter and the suction tube, and wherein the intermediate space is fluidly connected to the second inlet of the conduit via the suction tube.

The intermediate space is understood as an inside space of the filter module being formed between an interior wall of the tubular filter and an exterior wall of the suction tube.

Advantageously the intermediate space is an inside space that is otherwise closed, i.e., sealed, but includes an opening at the side of the second end of the tubular filter. Said opening is arranged to provide a fluid connection from the intermediate space to inside the suction tube. In other words, the suction tube is arranged to provide an isolated fluid connection between the intermediate space and the second inlet of the conduit, such that once the part of the liquid/solution of the slurry, such as a mother liquor, inside the vessel is filtered through the tubular filter, the filtered liquid/solution, i.e. filtrate, passes into the suction tube and subsequently to inside the conduit. Advantageously, said opening is disposed in proximity to the second end of the tubular filter.

Advantageously, the first outlet of the filtering device is disposed through the side wall of the vessel of the device, preferably such that approximately 85% or 90% or 95 % of the effective volume of the vessel can be obtained.

When the filtering device is in use for solid-liquid separating, the tubular filter of the filter module is destined to locate at least partially below the liquid level inside the vessel, and the second outlet of the conduit is connected to a vacuum creating means, such as a gas suction pump, such as a liquid ring vacuum pump, a roots pump or the like, destined to create a vacuum inside the conduit of the device. Thus, when the filtering device is in use for solid-liquid separating as an external concentrator, there is a vacuum inside the conduit and the filter module connected thereto via a connection between the second inlet of the conduit and the suction tube. When the tubular filter of the filter module is at least partially below the liquid level inside the vessel the liquid inside the vessel can pass through the tubular filter inside the intermediate space of the filter module due to the vacuum. Thereby inside the intermediate space the filtrate passes to the suction tube via its end that is towards the second end of the tubular filter. The filtrate inside the suction tube is then directed to the inlet of the conduit and further outside of the filtering device via the second outlet of the conduit.

One of the advantages of the invention over the known solutions of external concentrators in which the filtration is done by pressurizing the slurry inside the vessel of the filtering device to pass the part of the liquid of the slurry through the filter media is that due to the suctioning influencing from the clean side of the filter media the cake formed on the feed side of the filter media from the solid particles of the slurry comprises channeling, and a complete filter media blinding can be avoided, leading advantageously to an improved liquid-phase removal.

One further advantage of the invention over the known solutions of external concentrators destined to the over pressurizing the vessel to achieve filtering is that the vessel can be designed and built to be structurally lighter and there is lowered liquid leakage risk.

One of the advantages achievable with the suction tube is that when the filtering device is in use there is not a liquid pillar inside the intermediate space and all the filtrate therefrom is arranged to pass the end, i.e., head, of the suction tube toward the second end of the tubular filtered, maximizing thereby the effective filter area of the tubular filter.

Advantageously, the filter module is designed such that the suction tube extends proximity to the second end of the tubular filter. This allows to maximize the effective filter area, i.e., the area available for solid-liquid filtration, of the tubular filter.

According to an embodiment, the tubular filter includes a flat sheet membrane filter such as a fabric, which is arranged into a tubular form, for example by sewing, gluing, or welding. The flat sheet membrane filter is advantageously a multifilament fabric made of polymeric material such as polyester and/or polypropylene etc. If the tubular filter comprises a fabric as a filter media/member, the tubular filter may further comprise a supporting frame whereto the fabric is supported, to ensure maintaining the tubular form.

According to an embodiment, the tubular filter is, at least partially, disposed in-line with a part of the suction tube being extended between the first end and the second end of the tubular filter.

Advantageously, the joint, i.e., the connection, between the conduit and the filter module is airtight. According to an embodiment, an end, i.e., a head, of the second inlet of the conduit and the end of the suction tube that is destined to be joined with the inlet are both threaded arranged to fit detachable together. When such threads are threaded together a sealed connection between the suction tube and the conduit can be provided, for instance. So configured, a filtrate inside of the suction tube can enter the inlet of the conduit and sequentially pass through the conduit and exit the conduit from the second outlet of the conduit. Additionally or alternatively, the head of the second inlet of the conduit may comprise a female fitting that sealing engages a Luer fitting or the like with the filter module to provide said sealed connection. The advantage that the joint between the conduit and the filter module is airtight is that the vacuum inside the intermediate space can be maximized and hence the filtering performance of the filtering device.

According to an embodiment, an end of the intermediate space toward the conduit is sealed. For instance, said end may be sealed by a hollow cap arranged to fit the exteriors of the second inlet of the conduit and the first end of the tubular filter. Additionally or alternatively, the filter module may comprise a sealing member arranged to extend inside the intermediate space to seal it from the side of the first end of the tubular filter and to join to a part of the exterior of the suction tube and/or the second inlet of the conduit that is outside from the tubular filter.

The tubular filter comprises a plurality of pores in its filter media, i.e., filter medium, filter member, filtration medium etc., preferably sub-micrometer-sized and/or micrometer-sized pores, adapted for solid-liquid filtration through the tubular filter. Advantageously, in an embodiment, the filter media of the tubular filter is adapted for solid-liquid filtration, allowing to pass through the filter media only particles having the size of 0.5 µm or less, preferably 0.3 µm or less. In other words, the tubular filter has a porosity character that can be designed according to what sized solids it is intended to avoid from passing through it during the liquid-solid filtration.

In characterizing the porosity of filter membranes or filter media, in terms of e.g., total porosity %, total pore area and median pore diameter, Hg porosity measurement method(s) can be used.

The tubular filter may comprise a porous membrane. Additionally or alternatively, the tubular filter may be a tubular filter membrane.

According to an embodiment the tubular filter comprises a membrane being made of a polymeric material, preferably thermoplastic polymer, preferably wherein the polymeric material comprises polyamide, polyethylene, and polytetrafluoroethylene or any combinations thereof.

According to an embodiment, the filter media is made of high-density polyethylene (HDPE).

According to an embodiment, the tubular filter comprises a membrane being made of a ceramic, preferably wherein the ceramic is made from inorganic material comprising alumina, titania, zirconia oxide, and silicon carbide or any mixture thereof.

The porosity of the tubular filter, such as a porosity of the membrane of the tubular filter, may be fabricated by thermal sintering of particles of the filter media or membrane, for instance. Since the tubular filters and particularly tubular filter membranes are known per se, the skilled reader can provide the tubular filters suitable for an application where the present filtering device is applied. Alternatively, the filter media may consist of a flat sheet membrane filter, as described hereinabove.

According to an embodiment, the tubular filter has a nominal pore size in a range of approximately 0.1 µm to approximately 20.0 µm, preferably in a range of approximately 0.2 µm to approximately 20.0 µm, more preferably in a range of approximately 0.3 µm to approximately 15.0 µm. As appreciated by the skilled person, the nominal pore size depends on the application of the filtering device. For instance, determining what kind of porosity characteristics, such as the pore sizes, for the filter media to be used, depends on the particle size of the solids that is designed to be filtered.

In characterizing the porosity of filter membranes, in this disclosure, a term of "nominal pore size" refers to the diameter of the smallest particle that cannot pass through the membrane. Porosimetry is commonly used to determine the nominal pore size. The First Bubble Point (FBP) as defined by ASTM F-316-03 (2011) "Standard Test Methods for Pore Size Characteristics of Membrane Filters by Bubble Point and Mean Flow Pore Test" is commonly used for characterizing nominal pore sizes of filter membranes.

According to an embodiment, the suction tube comprises a tubular wall that is advantageously impermeable to the filtrate, i.e., the liquid to be filtered. This has the advantage that a liquid pillar inside the intermediate space in use can be avoided and all the filtrate therefrom is arranged to pass the end, i.e., the head, of the suction tube toward the second end of the tubular filter. In other words, the effective filter area may be maximized as the filtrate can efficiently transferred from the intermediate space regardless the orientation of the tubular filter.

To ensure that the filtrate is destined to pass via the end of the suction tube toward the second end of the tubular filter the suction tube has lower porosity than the tubular filter. Advantageously the suction tube is made of impermeable material. The suction tube may be made of stainless steel, for instance.

According to an embodiment, the filtering device comprises a plurality of filter modules installed apart from each other, wherein each intermediate space of the plurality of the filter modules being fluidly connected to the second inlet of the conduit. Preferably the conduit comprises a plurality of second inlets, and wherein each intermediate space of the plurality of the filter modules being fluidly connected to one inlet.

The plurality of filter modules may be arranged either side-by-side or in a circular pattern or both to form a bundled configuration that allows increasing total effective filter area and hence the performance of the filtering device.

The plurality of filter modules can be configured in such a way that a single second inlet of the conduit can be used to receive the filtrate of multiple filter modules. For instance, multiple tubular filters may be arranged in a connected belt-like configuration connected to a single suction tube branching to these multiple tubular filters. Alternatively, multiple tubular filters may each have a separate suction tube connected to a separate inlet of the conduit.

According to an embodiment, the filtering device comprises a plurality of filter modules and the conduit comprises a plurality of second inlets, wherein each intermediate space of the plurality of the filter modules being fluidly connected to one second inlet.

According to an embodiment, the filtering device comprises a mixing means for mixing the slurry inside the vessel of the filtering device.

According to an embodiment the filtering device comprises a plurality of filter modules arranged around the mixing means.

According to an embodiment, the filtering device comprises a supporting member arranged to support the filter module to an interior wall of the vessel of the filtering device.

One of the advantages of the filter module is that it is possible to install/mount onto the top part and/or through the top lid of the sealable vessel the filtering device. Advantageously, this mounting, i.e., the joint of the filter module and the vessel, is done in such a way that it is airtight. When the filter module is mounted onto the top part of the vessel it is destined that the filter module, and especially the tubular filter of it, is at least partially inside the vessel of the filtering device. Advantageously, the tubular filter is inserted such that all its effective filter area is destined to be below the desired liquid level, which can be determined by the first outlet of the filtering device.

When the filtering device is in use and there is difficulty to maintain the filtering performance uniform due to contamination and/or partial clogging of the tubular filter, it is preferable to restore/control the performance by executing a purging step by back pulsing or back blowing to the filter module, i.e., by creating a positive, pulse-type pressure inside the filter module.

In a second aspect, the second object of the invention is achieved by providing a system for manufacturing an aqueous slurry according to claim 15. The system comprises:
- a chemical reactor, i.e., a process/reaction vessel, for reacting, i.e., including feeding and mixing, an aqueous metal salt solution with a precipitant to form an aqueous slurry comprising a liquid fraction and a solid faction, and
- a filtering device according the first aspect of the invention.

The chemical reactor comprises a third inlet configured to be fluidly connected to the first outlet of the filtering device, and a third outlet configured to be fluidly connected to the first inlet of the filtering device.

Preferably the system further comprises a vacuum creating means configured to provide a negative pressure inside the suction tube via the second outlet of the conduit of the filtering device.

Preferably the system further comprises a slurry transfer pump disposed either in a first slurry pipeline between the third outlet of the chemical reactor and the first inlet of the filtering device or a first slurry pipeline between the third inlet of the chemical reactor and the first outlet of the filtering device.

According to an embodiment, the system comprises an external filtrate storage tank fluidly connected to the second outlet of the filtering device for storing the filtrate separated through the filtering device. Advantageously, the external filtrate storage tank is disposed in in a discharge pipeline between the vacuum creating means and the second outlet of the filtering device.

When the system is in use the slurry inside the vessel of the filtering device being advantageously in overflow from the first outlet of the filtering device.

According to an embodiment, the reactor comprises a liquid-level meter and the system comprises a controlling means for adjusting the filtering efficiency of the filtering device, e.g., by adjusting the vacuum created by the vacuum creating means, to maintain the liquid level inside the chemical reactor in a predetermined liquid level range.

In a third aspect, the third object of the invention is achieved by providing a method for manufacturing an aqueous slurry, such as precipitating hydroxide or oxyhydroxide of one or more metal elements, according to claim 11. The method comprises supplying and mixing at least one first aqueous solution comprising a metal salt of one or more elements, preferably the one or more elements include at least one of Ni, Co and Mn, and a second aqueous solution comprising a precipitant in a chemical reactor, thereby forming an aqueous slurry comprising a liquid fraction and a solid faction, circulating the aqueous slurry between the chemical reactor and a filtering device according to the first aspect of the invention, and increasing the solid fraction of the aqueous slurry inside the vessel of the filtering device by vacuum filtrating the aqueous slurry through the tubular filter of the filtering device.

According to an embodiment, the vacuum filtrating comprises suctioning the liquid fraction through the tubular filter via the suction tube extending inside the tubular filter.

According to an embodiment, the suctioning comprises suctioning by a vacuum creating means, such as a liquid-ring pump, a filtrate through the tubular filter into an intermediate space between the tubular filter and the suction tube and conducting the filtrate from the intermediate space via the suction tube outside the external filtering device.

Various embodiments according to the present invention are disclosed in the claims as well as in the description. The embodiments and examples recited in the claims and in the description are mutually freely combinable unless otherwise explicitly stated. Throughout the entire disclosure, if any numerical ranges are provided, the ranges also include the endpoint values unless otherwise explicitly stated.

In the following, embodiments of the invention are explained in more detail based on the figures. Identical reference signs thereby refer to identical or corresponding elements and their unnecessary redescription has been avoided.

### BRIEF DESCRIPTION OF THE FIGURES

FIG. 1 shows an advantageous design of the filtering device 100.
FIGS. 2A and 2B show an advantageous design of the filter module 90 and FIG. 2C shows a further advantageous embodiment of the filtering device.

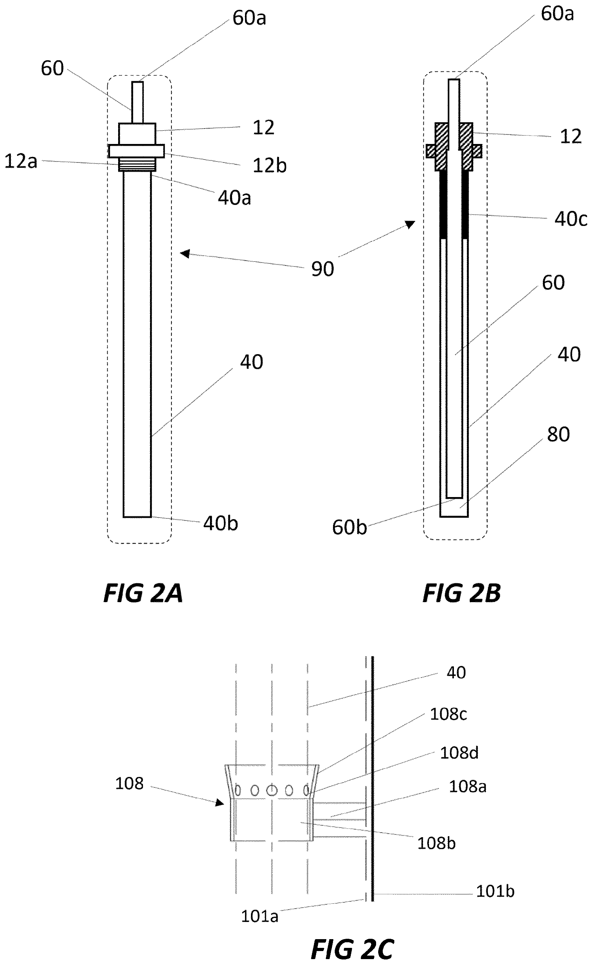

FIG. 2 shows an advantageous design of the system 200 for manufacturing an aqueous slurry.

### DETAILED DESCRIPTION OF THE INVENTION

In the following detailed description, preferred embodiments are described in detail to enable the practice of the invention. Although the invention is described with reference to these specific preferred embodiments, it will be understood that the invention is not limited to these preferred embodiments. To the contrary, the invention includes numerous alternatives, modifications and equivalents as will become apparent from the consideration of following detailed description and accompanying drawings.

The term "comprising", as used herein and in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

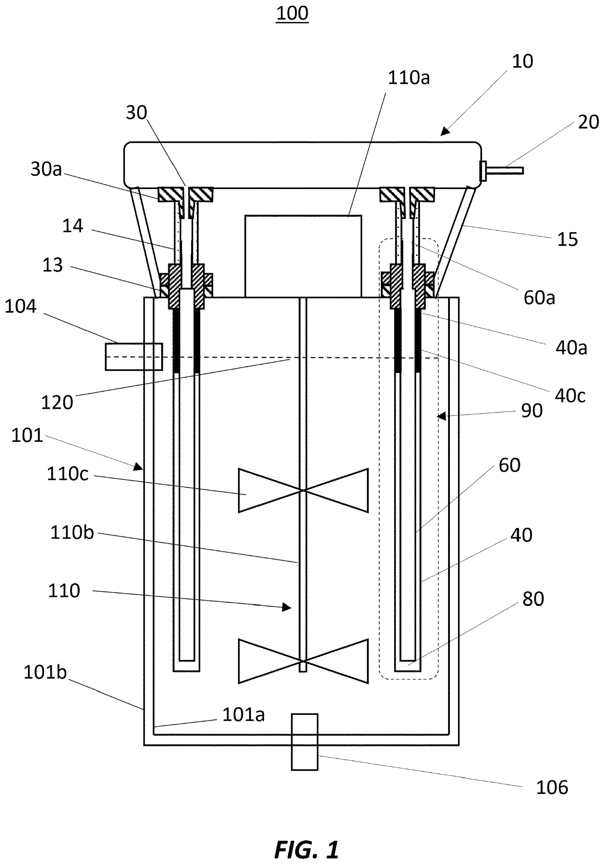

Referring to the figures in detail, FIG. 1 shows as a side cross-sectional view an advantageous design of the filtering device 100. It 100 comprises a sealable, cylindrical, and jacketed vessel 101, i.e., a filtering vessel, having an interior wall 101a and an exterior wall 101b. It 100 comprises a circular-shaped conduit 10, attached on top of the lid of the vessel 101. Advantageously both the vessel 101 and the conduit 10 are made of corrosive resistant material, such as stainless steel. The vessel 101 comprises a first inlet 106 at the bottom of it 101 for receiving the slurry to be filtered from outside the device 100 to inside the vessel 101 and a first outlet 104 on the side wall of the vessel 101 for conducting the content of the vessel 101, i.e., the filtered slurry, outside the vessel 101. The device 100 further comprises a filter module 90, installed on top of the lid of the vessel 101 and extending inside the vessel 101. A connecting hose 14 connects the filter module 90 to the conduit 10, being secured to a connector 30a of the second inlet 30 of the conduit 10 from its one end and to the first end of the of the suction tube 60 of the filter module 90 from its another end. The filter module 90 is shown separately in FIGS 2A and 2B for the sake of the clarity. In this design 100 the conduit 10 comprises at least one supporting frame 15 for supporting the conduit 10 to an operable distance above the top lid of the vessel 100. To maintain the content of the vessel 101 homogeneous the device 100 comprises a mixing means 110, having a motor 110a on top of the lid of the vessel 101 and the mixing shaft 110b extending inside the vessel 101, which shaft comprises an impeller 110c. In the design 100 the saft is aligned with the tubular filters 90 of the filter modules 90 and two impellers attached to the saft are shown in the figure. Not shown in the figure, the filter module 90 may be supported to an interior wall 101b of the vessel 101.

In one embodiment, the connecting hose 14 is attached to the suction tube 60 with a Camlock coupling or the like to enable detachable fitting between the connecting hose 14 and the filter module 90. Additionally or alternatively, the connecting hose 14 can be attached to the second inlet 30 of the conduit 10 with a Camlock coupling or the like to enable detachable fitting between the connecting hose 14 and the conduit 10.

FIG. 2A is a side view and FIG. 2B is a side cross-sectional view of the filter module 90 of the design 100 of the filtering device, respectively. It 90 comprises a tubular filter 40 having a filter media and having a first end 40a and a second end 40b. The first end 40a is open and the second end 40b being sealed, i.e., closed. It 90 further comprises a suction tube 60 arranged to extend inside the tubular filter 40 between the first end 40a and the second end 40b of the tubular filter 40. These two parts are assembled such that the tubular filter 40 surrounds the suction tube 60 such that there is an intermediate space 80 between an interior wall of the tubular filter 40 and an exterior wall of the suction tube 60. The intermediate space 80 is therefore fluidly connected to the first end 60a of the suction tube 60, extending outside the tubular filter 40, via the second end 60b of the suction tube 60. In other words, the intermediate space 80 continues at the side of the second end 40b of the tubular filter 40 such that a filtrate inside the intermediate space 80 is allowed to pass the open second end 60b of the suction tube 60 pointing towards the second end 40b of the tubular filter 40, i.e., downwards in the figure. There is in the filter module 90 a hollow connector 12 that seals the end of the intermediate space 80 at the first side 40a of the tubular filter 40 to the outer wall of the suction tube 60. In this design of the filter module 90 the hollow connector 12 comprises in its exterior wall a threading 12a and a collar 12b which are adapted to provide mounting means for the filter module 90 to the vessel 101, as shown for the design 100 in FIG 1. In the design 100 the filter module 90 is attached to a connector 13 of the top lid of the vessel, having advantageously a counter-threading for the threading 12a of the filter module 90. As appreciated by the skilled person, also other type of installations may be used to install the filter module 90 to the vessel 101, such as bolt fastening, for instance. One of the advantages of the described installation is that that allows an easy maintenance of the filter module.

FIG. 2C shows a side cross-sectional view of a supporting member 108 of an embodiment of the filtering device arranged to support detachable manner the filter module 90 preferably to an interior wall of the vessel of the filtering device. In the embodiment shown in the figure the supporting member 108 has a first member 108a attached to the interior wall 101a of the vessel 101 and a second member 108b extending from the first member 108a, arranged to extend at least partially over the exterior wall of the tubular filter 40 and providing hence at least partial lateral support for the filter 40. In the figure, only a part of the tubular filter 40 of the filter module 90 surrounded by the second member 108b is shown such that the second 40b, i.e., the closed end, of the filter 40 being toward down and the first, i.e., the open end being toward up. The part of the wall of the vessel 101 shown in the figure is a part of the side wall of the vessel 101.

Advantageously, the supporting member 108 has a third member 108 arranged to extend from the second member 108b toward the top lid of the vessel 101, i.e., toward up in the figure, in a way that the space that third member 108c at least partially encloses increases. In other words, the supporting member 108 is arranged to enclose the perimeter of the tubular filter 40 at least partially when the tubular filter 40 being disposed through the space enclosed by the second member 108b and the third member 108c. A conical enclosure provided by the third member 108c is arranged to widen toward the top lid of the vessel 101 and/or toward the direction of the first end 40a of the tubular filter 40. Then the third member 108b can facilitate an easier installation of the tubular filter 40 through the second member 108b of the supporting member 108. Advantageously, the third member 108c comprises at least one opening 108c allowing to allow the slurry inside the vessel 101 of the filtering device to pass the conical enclosure of the third member 108c, i.e., to prevent an accumulation of the slurry and the solids therein between the third member 108c and the tubular filter 40.

One filter module 90 may be supported by at least one supporting member 108. According to an embodiment, the tubular filter comprises 90 being supported by at least supporting member 108.

The filter module 90 is advantageously mounted on top of a vessel 101 such that at least a part of the filter media of the tubular filter 40 is to be located below a determined/desired liquid level 120 inside the vessel, i.e., below the first outlet 104 in the figure. To obtain a good filtering performance for the filtering device when it is in use the filter media of the tubular filter 40 is disposed completely below the liquid level 120. This results in suctioning liquid/solution through the tubular filter 40 but not suctioning gas from a possible gas/atmosphere space, i.e., a space between a reaction vessel lid and a liquid surface inside the chemical reactor, to the intermediate space 80. In FIG. 1 it is indicated by 40c the part of the tubular filter 40 that advantageously is impermeable and/or incapable section of the filter 40 for filtering to ensure that when the device is in use the gaseous space above the first outlet 104, i.e., the space between the lid and the destined liquid level is not sucked by inside the tubular filter 90.

In the design of FIG. 1 the filtering device 100 has a plurality of filter modules 90 of which two are shown in the figure. Advantageously, the plurality of filter modules 90 are installed apart from each other and each intermediate space 80 of the plurality of the filter modules 90 is fluidly connected to one second inlet 30 of the conduit 10. The filter modules 90 are arranged advantageously circumferentially around the mixing axle 110b.

The plurality of filter modules 90 may be arranged either side-by-side or in a circular pattern or both to form a bundled configuration. The plurality of filter modules 90 allows to increase total effective filter area and hence the performance of the filtering device.

According to an embodiment, the plurality of filter modules is arranged in a circular pattern. Preferably, the mixing axle 110b of the mixing means 110 is positioned inside the circular pattern.

Suitable materials for the part of the tubular filter 40 providing the filter media, such as a membrane for filtering, can include polymeric material. Preferably, the polymeric material is thermoplastic polymer such as polyamide, polyethylene, and polytetrafluoroethylene or any mixture thereof. A suitable example for such polymers is polyethylene. The membrane may be manufactured by thermal sintering, for instance. Alternatively or additionally, the membrane can include ceramic. Preferably, the ceramic is made from inorganic material comprising alumina, titania, zirconia oxide, and silicon carbide or any mixture thereof.

The wall thickness of the part of the tubular filter 40 providing the filter media for the filter module 90, such as a membrane, may vary depending on the application. It can, for instance, be in the range of approximately 0.5 mm to 20 mm.

There are various suitable materials for the parts of the filtering device 100 such as the vessel 101, the conduit 10, the connecting hose 14, and the suction tube 60. As described hereinabove, the suction tube is made of material that is advantageously impermeable to air and other gases and to liquids such as to liquids to be filtered. For instance, stainless steel can be used. To provide easy maintenance of the filter module 90 the connecting hose 14 may comprise of rubber or any other flexible material suitable for the chemical conditions applied. The conduit 10 and/or the vessel 101 may be made from stainless steel, for instance.

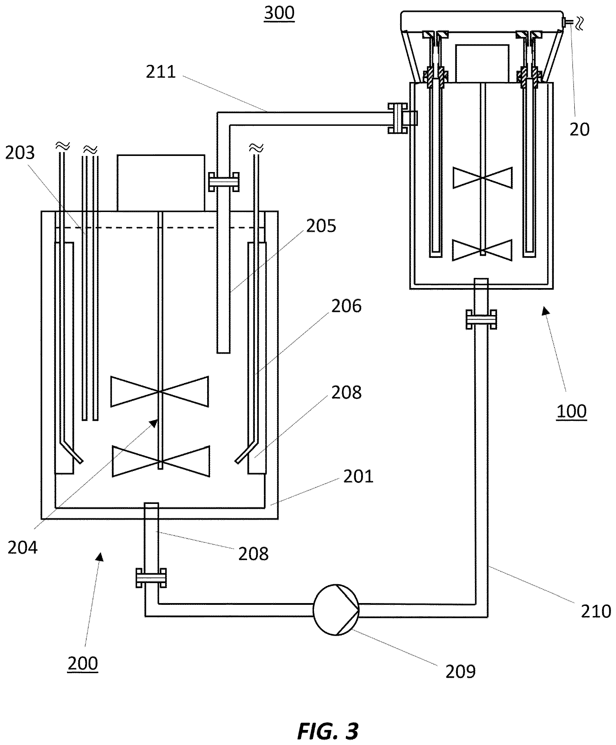

FIG. 3 shows one possible design of another aspect of the invention that is a system 300 for manufacturing an aqueous slurry, such as for precipitating hydroxide or oxyhydroxide or carbonate of one or more metal elements. The system comprises the filtering device according to the first aspect of the invention. For the sake of clarity, the complete set of the reference signs of the parts of the filtering device 100 is not shown in FIG.3 as they are the same as shown in FIG.1.

The design of the system 300 shown in FIG. 3 comprises the filtering device 100 as described above connected to a chemical reactor 200 via a first slurry pipeline 210 and a second slurry pipeline 211. The first slurry pipeline 210 is arranged to transfer the slurry from the reactor 200 through a third outlet 208, i.e., outlet valve, of the reactor 200 to the vessel 101 of the filtering device 100 through the second inlet 106 by aid of a slurry transfer pump 209. It 209 is disposed in the first slurry pipeline 209 between the reactor 200 and the filtering device 100. The second slurry pipeline 211 is arranged to transfer the slurry from the filtering device 100 through the first outlet 104 of the filtering device 100 back to the reactor 200 through a third inlet 205 of the reactor 200. The reactor 200 further comprises a second sealable vessel 201, a raw material dosing tube 206, a pH sensor 203, an impeller means 204, and a baffle 208. Similarly, as the mixing means 110 of the filtering device 100 the mixing means 204 of the reactor 200 have a motor on top of the lid of the reactor 200 and the mixing shaft extending inside the vessel 201, which shaft comprises an impeller.

Further, the system 300 comprises a filtrate discharge pipeline connected to the second outlet 20 of the filtering device 100 for discharging the filtrate, i.e., fluid to be filtrated through the device 100, not shown in the figure. Still further it 300 comprises a vacuum creating means, such as a vacuum pump or the like, not shown in the figures, arranged to generate a vacuum to the second outlet 20 and hence inside the filter unit 90 of the filtering device 100, and an external filtrate storage tank fluidly connected to the second outlet 20 for storing the filtrate separated through the filtering device 100.

The dimensions of the filtering device 100, and especially the dimensions of the tubular filter(s) 40 of the filter unit(s) 90 affecting filtering performance such as in terms of the effective filter area, are dependent on the characteristics of the used filter media, e.g., its porosity, and an application and conditions where the filtering device is destined to be used. However, advantageously, the filtering performance, i.e., the volume of the recovered filtrate per a time unit that is how much is it possible to filtrate through the filtering device 100 per a time unit, is at least approximately the same as the predetermined solution feed rate into the reactor 200. This can be achieved, for instance, by varying the number of the filter modules 90 and the parts therein and their dimensions including their dimensions of cross-sections and lengths and/or by varying the characteristics of the filter media of the tubular filter(s), for instance. This can easily be done by the skilled person within the scope of the appended claims.

The homogeneity of the slurry flowing in the system when it is used can at least partially be adjusted by the adjusting the slurry flow inside the slurry pipelines 210 and 211. This can be done, for instance, by adjusting the slurry pumping rate done by the slurry transfer pump 209. Advantageously, it 209 comprises a variable-frequency drive, i.e., an inverter drive, for adjusting the pumping power.

According to an embodiment, the system comprises a flow indicator and controlling means destined to measure and adjust the flow of the slurry through the first slurry pipeline 210 and/or the second slurry pipeline 211. The flow indicator and controlling means comprises a flow measuring means, such as a mass flow meter or the like, and a flow controlling means. The flow measuring means is arranged to measure the flow and/or the density of the slurry inside the first slurry pipeline 210 and/or the second slurry pipeline 211. The flow measurement means is further arranged to communicate the measured flow value to the flow controlling means, which in turn, is arranged to process the measured value and to communicate with the slurry transfer pump 209 for adjusting the pumping rate for adjusting the flow rate inside the pipeline. For instance, the controlling means may comprise a user interface having a set value changeable by the operator, and the flow indicator and controlling means is arranged to adjust the flow rate to meet the value of the set value in a way as described above.

According to an embodiment, the vacuum creating means comprises is a liquid-ring pump. One of the advantages to use the liquid-ring pump is that gas/air sucked from the vessel 101 of the filtering device 100 does not harm suctioning of the filtrate as it may do in other type of vacuum creating means.

According to an embodiment, the conduit 10 of the filtering device 100 comprise a gas inlet, not shown in the figures, which gas inlet is arranged to allow back blowing e.g., N2 gas inside the filtering device for removing contamination from the tubular filter(s) 40 and especially from its 40 feed side.

According to an embodiment, the filtrate discharge pipeline comprises the means for the back blowing the tubular filter(s) 40.

According to an embodiment, the chemical reactor 200 comprises a fourth outlet locating advantageously at the bottom of the vessel 201 of the chemical reactor 200 for discharging the slurry from the reactor 200, not shown in the figures. The fourth outlet may be connected to a slurry discharge pipeline comprising a second slurry transfer pump, such as a centrifugal pump or the like, for recovering the slurry from the system. Advantageously the vessel 101 of the filtering device 100 comprise a discharge outlet connected to the slurry discharge pipeline for recovering the slurry from the filtering device. The discharge outlet of the filtering device may be the first inlet 106 having than a valve means for conducting the slurry to the slurry discharge pipeline. Additionally or alternatively, the vessel 101 of the filtering device 100 may comprise a fifth outlet locating advantageously at the bottom of the vessel 101 connected to the slurry discharge pipeline for recovering the slurry from the filtering device.

In further another aspect of the invention, a method for manufacturing an aqueous slurry, such as precipitating hydroxide or oxyhydroxide or carbonate of one or more metal elements, is disclosed. The method comprises supplying and mixing raw materials including at least one first aqueous solution comprising a metal salt of one or more elements, such as metal elements, in a desired mixture ratio and a second aqueous solution comprising a precipitant in the chemical reactor 200 to form an aqueous slurry. The one or more elements include at least one of Ni, Co and Mn. When a predetermined liquid level inside the chemical reactor 200 is reached, which may be, e.g., 80-100 % of the inside volume of the chemical reactor, depending on the application, the method further comprises increasing the solid fraction, i.e. solids content, of the aqueous slurry by circulating the aqueous slurry between the chemical reactor 200 and a filtering device 100 by aid of the slurry transfer pump 209 and increasing the solid fraction of the aqueous slurry inside the vessel 101 of the filtering device 100 by vacuum filtrating the aqueous slurry through the tubular filter 40 of the filtering device 100.

The solid fraction of the obtained aqueous slurry may contain, depending on the precipitant used, either hydroxide or carbonate particles. Such particles can be used as precursor material of lithium transition metal cathode materials for positive electrodes. A desired precursor material, regarding e.g., its desired chemical composition and size, can be obtained by washing and drying the product obtained according to the manufacturing process of the aqueous slurry.

For instance, the filtering during the precipitating process may be executed in such a way that there are predetermined lower and upper limits for the liquid level inside the chemical reactor 200 when the filtering device 100 is arranged to keep the liquid level between said limits.

The supplying and mixing raw materials in the method may further comprise supplying and mixing a third aqueous solution comprising a complexing agent in the chemical reactor 200. The complexing agent may be selected from ammonia, glycine, tartrate, citrate, and oxalate or the like. The content of the complexing agent may be used at any suitable amount generally used in the art for complexing agents. The complexing agent is, for example, aqueous ammonia.

Advantageously, the liquid level inside the chemical reactor 200 can be kept substantially constant by adjusting the volume of the filtrate discharged from the filtering device and the volume of the raw materials fed to the chemical reactor per a time unit substantially to the same value.

Advantageously, in the method a part of the liquid portion of the slurry inside the vessel 101 of the filtering device 100 is sucked by a vacuum creating means, such as a liquid-ring pump, through the tubular filter(s) 40 into an intermediate space(s) 80 between the tubular filter(s) 40 and subsequently conducted into the suction tube(s) 60 of the filter module(s) and further via the conduit 10 outside the external filtering device.

The method step of supplying and mixing raw materials may be preceded by any of the following step or any of the combination thereof: 1) providing a full or partial inert gas atmosphere inside the chemical reactor 200 by passing an inert gas, such as N₂ gas, and/or a mixture of gases, such as a mixture of N₂ gas and air, through the chemical reactor 200, 2) providing a starting solution to the chemical reactor 200, comprising providing an aqueous solution comprising one or more precipitants and a possible complexing agent, and 3) adjusting and maintaining a desired temperature inside the chemical reactor 200.

### Examples

The present invention is further illustrated with reference to some examples.

### Example 1

A system according to Figure 3 was built comprising a chemical reactor 200 having an effective volume of 200 I, equipped with baffles and a mixing means having a six-bladed turbine for mixing, connected via the slurry transfer pipelines 210 and 211 to a filtering device 100 for mother liquor withdrawal from the reaction slurry.

The connected filtering device 100 comprises a sealable vessel of 200 I equipped with a mixing means having two 45-degree pitch impellers for mixing. The filtering device 100 comprises 16 filter modules 90 attached to the conduit 10, as described hereinabove. The length of the tubular filters 40 is 660 mm and the outer diameter is 53 mm. The slurry transfer pump 209 in the first slurry pipeline 210 is a centrifugal pump with an electric motor, equipped with an inverter drive connected to a flow indicator and controlling means destined to measure and control the flow of the slurry through the first slurry transfer pipeline 210. In the system an external filtrate storage tank of 2 m³ is connected in the filtrate discharge pipeline between the liquid-ring pump manufactured by Nash and to the second outlet 20 of the filtering device 100 for storing and suctioning the filtrate, respectively.

### Example 2

In this example an aqueous slurry of a ternary transition metal hydroxide of nickel, manganese, and cobalt and a dried product obtained from the slurry was prepared by using the system of Example 1 for preparing the slurry.

First, a starting solution was prepared by feeding of 270 L of deionized water and 40 L of 120 g/L aqueous seed slurry of 5 µm D50-sized Ni(OH)₂ to the reactor 200 and transferring the solutions by the slurry transfer pump 209 between the reactor 200 and the filtering device 100. The temperature of the solution was adjusted to 85 °C by heating the water jacket of the chemical reactor 200 and respectively an inert atmosphere was ensured by bubbling nitrogen gas below the liquid level in the reactor 200 at 0.6 m³/h. Once the temperature was reached, 4.5 kg of 220 g/L ammonia water was added to the reactor, followed by adding 220 g/L sodium hydroxide aqueous solution until the pH of the solution reached a value of 11.6.

Then, precipitation of the transition metal hydroxide was conducted by continuously feeding NiSO₄, MnSO₄, and CoSO₄ 120 g/L aqueous solutions with the stoichiometric ratios of Ni:Mn:Co of 0.92:0.03:0.05, 220 g/L ammonia water and 220 g/L sodium hydroxide aqueous solution to the chemical reactor 200 such that the NH₃ concentration of the reaction mixture, i.e., aqueous slurry, was 11 g/L and the pH was 11.7±0.1, respectively. The total feed rate of the NiSO₄, MnSO₄, and CoSO₄ solutions was 14 L/h in the beginning and increased continuously to 40 L/h from the beginning for 40 hours, followed by maintaining the total feed at 59 L/h for the rest of the precipitating process.

The mixing inside the chemical reactor 200 was done by rotating the turbine at 340 rpm for first 4 hours and then dropping it with 20 rpm after each 2 hours until maintaining it at 180 rpm after 12 hours and the mixing inside the filtering device 100 was done by rotating the impeller at 100 rpm throughout the precipitating process. The slurry between the reactor 200 and the filtering device 100 was transferred with the flow rate of 4 m³/h by controlling the slurry transfer pump 209 with the flow indicator and controlling means. Mother liquor was filtered through the filtering device 100 such that the liquid level inside the reactor 200 was maintained within the range of 85-95 % of its effective volume.

The precipitation was ended when an average particle diameter (D50) of the transition metal hydroxide reached approximately the target value of 12 µm. The solids content of the slurry at the end of the precipitation was approximately 800 g/l. The transition metal hydroxide was obtained by washing and filtrating the solid fraction from the slurry recovered the system, followed by drying.

The obtained transition metal hydroxide was analyzed by the ICP-OES analysis method and the laser diffraction-based particle size analyzing method, the results are reported in Table 1.

**Table 1**

| Item | Metal content [(Ni(mol%)/ Mn(mol%)/ Co(mol%)] | D10 (µm) | D50 (µm) | D90 (µm) | span [(D90-D10)/ D50], measured from dried product |
|---|---|---|---|---|---|
| Example 2 | 91.83:3.12:5.05 | 9.90 | 11.70 | 14.00 | 0.34 |

## Claims

1. A filtering device (100) for solid-liquid filtration of a slurry of a coprecipitation process, the filtering device comprising:
a sealable vessel (101) comprising a first inlet (106) for receiving the slurry into the vessel and a first outlet (104) for conducting the slurry outside the vessel;
a conduit (10) for conducting a filtrate to outside of the sealable vessel (101), the conduit comprises a second inlet (30) and a second outlet (20); and
a filter module (90) comprising a tubular filter (40) extending inside the vessel (101) having a first end (40a) and a second end (40b), the first end (40a) of the tubular filter (40) being open and a second end (40b) of the tubular filter (40) being sealed,
the filter module (90) comprises a suction tube (60) arranged to extend inside the tubular filter (40) between the first end (40a) and the second end (40b) of the tubular filter (40), wherein there is an intermediate space (80) between the tubular filter (40) and the suction tube (60), and wherein the intermediate space (80) is fluidly connected to the second inlet (30) of the conduit (10) via the suction tube (60).

2. The filtering device according to claim 1, wherein the tubular filter (40) comprises a membrane being made of a polymeric material, preferably thermoplastic polymer, preferably wherein the polymeric material comprises polypropylene, polyamide, polyethylene, and polytetrafluoroethylene or any mixture thereof.

3. The filtering device according to claim 1, wherein the tubular filter (40) comprises a membrane being made of a ceramic, preferably wherein the ceramic is made from inorganic material comprising alumina, titania, zirconia oxide, and silicon carbide or any mixture thereof.

4. The filtering device according to any of the preceding claims, wherein an end of the intermediate space (80) toward the conduit (10) is sealed.

5. The filtering device according to any of the preceding claims, wherein the tubular filter is adapted for solid-liquid filtration of particles having the size of 0.5 µm or less, preferably 0.3 µm or less.

6. The filtering device according to any of the preceding claims, wherein the suction tube (60) comprises a tubular wall that is impermeable to the filtrate.

7. The filtering device according to any of the preceding claims, wherein the filtering device comprises a plurality of filter modules (90) installed apart from each other, wherein each intermediate space (80) of the plurality of the filter modules (90) being fluidly connected to the second inlet of the conduit (10), preferably the conduit (10) comprises a plurality of second inlets (30), and wherein each intermediate space (80) of the plurality of the filter modules (90) being fluidly connected to one inlet (30).

8. The filtering device (according to any of the preceding claims, comprising a mixing means (110) for mixing the slurry inside the vessel (101).

9. The filtering device according to claim 7 and 8, wherein the plurality of filter modules (90) are arranged around the mixing means.

10. The filtering device according to any of the preceding claims, comprising a supporting member (108) arranged to support the filter module (90) to an interior wall (101a) of the vessel (101).

11. A method for manufacturing an aqueous slurry, the method comprising:
supplying and mixing at least one first aqueous solution comprising a metal salt of one or more elements, preferably the one or more elements include at least one of Ni, Co and Mn, and a second aqueous solution comprising a precipitant in a chemical reactor, thereby forming an aqueous slurry comprising a liquid fraction and a solid faction;
circulating the aqueous slurry between the chemical reactor and a filtering device according to any of claims 1-10; and
increasing the solid fraction of the aqueous slurry inside the vessel of the filtering device by vacuum filtrating the aqueous slurry through the tubular filter of the filtering device.

12. The method according to claim 11, wherein the vacuum filtrating comprising suctioning the liquid fraction through the tubular filter via the suction tube (60) extending inside the tubular filter.

13. The method according to claim 12, wherein the suctioning comprising suctioning, by a vacuum creating means, such as a liquid-ring pump, a filtrate through the tubular filter into an intermediate space (80) between the tubular filter (40) and the suction tube (60), and conducting the filtrate from the intermediate space (80) via the suction tube (60) outside the external filtering device.

14. The method according to claim 11 or 12, wherein the precipitant comprises a hydroxide or at least one selected from a carbonate and a bicarbonate.

15. A system (300) for manufacturing an aqueous slurry, wherein the system comprises:
- a chemical reactor (200) for reacting an aqueous metal salt solution with a precipitant to form an aqueous slurry comprising a liquid fraction and a solid faction, and
- a filtering device (100) according to any of claims 1 to 10,
wherein the chemical reactor (200) comprises a third inlet (205) configured to be fluidly connected to the first outlet (104) of the filtering device (100), and a third outlet (208) configured to be fluidly connected to the first inlet (106) of the filtering device (100);
preferably the system (300) further comprises a vacuum creating means configured to provide a negative pressure inside the suction tube (60) via the second outlet (20) of the conduit (10) of the filtering device (100).
